Europäisches Patentamt

European Patent Office

Office européen des brevets

(11) Publication number: **0 104 936**
**B1**

(12) **EUROPEAN PATENT SPECIFICATION**

(45) Date of publication of patent specification: **09.04.86**

(21) Application number: **83305771.4**

(22) Date of filing: **27.09.83**

(51) Int. Cl.⁴: **H 01 B 1/08** // H01M6/18, G02F1/17

(54) Lithium oxide-based amorphous ionic conductor.

(30) Priority: **29.09.82 JP 168361/82**

(43) Date of publication of application:
**04.04.84 Bulletin 84/14**

(45) Publication of the grant of the patent:
**09.04.86 Bulletin 86/15**

(84) Designated Contracting States:
**CH DE FR GB LI NL**

(56) References cited:
DE-A-3 039 900
GB-A-2 032 128
US-A-4 184 015
US-A-4 237 201

PATENT ABSTRACTS OF JAPAN, unexamined
applications, section E, vol. 6, no. 136 (E-120)
(1014), July 23, 1982, THE PATENT OFFICE
JAPANESE GOVERNMENT, page 8 E120,
Kokai-no. 57-60669 (HITACHI)

(73) Proprietor: **HITACHI, LTD.**
**6, Kanda Surugadai 4-chome Chiyoda-ku**
**Tokyo 100 (JP)**

(72) Inventor: **Miyauchi, Katsuki**
**5-29-10 Hino-honmachi**
**Hino-shi Tokyo (JP)**
Inventor: **Kanehori, Keiichi**
**33-15 Sayama-new town Kashiwabara**
**Sayama-shi Saitama-ken (JP)**
Inventor: **Kudo, Tetsuichi**
**2-17-5 Oyamadai**
**Setagaya-ku Tokyo (JP)**

(74) Representative: **Paget, Hugh Charles Edward**
**et al**
**MEWBURN ELLIS & CO. 2/3 Cursitor Street**
**London EC4A 1BQ (GB)**

EP 0 104 936 B1

## Description

This invention relates to a lithium oxide-based amorphous solid ionic conductor, and a thin film made of such material.

Recently, lithium ion conductive solids have attracted increasing attention. Particularly, lithium ion conductors have been put to practical use as solid electrolytes in lithium batteries and as electrolytes in electrochromic displays. The use of a lithium ion conductor as the solid electrolyte of a lithium battery has made rapid progress in recent years because demands for a battery having a reduced thickness are increasing with the miniaturization of electronic devices, especially with the reduction of their thickness. The use of a lithium ion conductor as the electrolyte of an electrochromic display enables the production of an electrochromic display device in an all solid-state arrangement and stabilizes the device characteristics. It is important for both of these applications to develop a solid electrolyte which has high ionic conductivity and is stable in normal atmosphere. In the application of a solid electrolyte to all solid-state electrochemical devices, an electrolyte material needs to be developed which has high chemical stability between a lithium electrode and the electrolyte.

A solid electrolyte thin film material having high lithium ion conductivity and a method of producing the same are disclosed in for example Japanese Laid-Open Patent Specification No. 60669/1982. However, the material disclosed in this prior art reference does not have both of the important properties of high lithium ion conductivity and high chemical stability to lithium metal. For these reasons, all solid-state batteries and all solid ECD's using these electrolytes have the drawback that both their shelf life and their cycle life are short due to the reaction of the electrolyte with the electrode.

By the present invention, we seek to provide a lithium oxide-based amorphous ionic conductor in the form of a thin film having a high ionic conductivity.

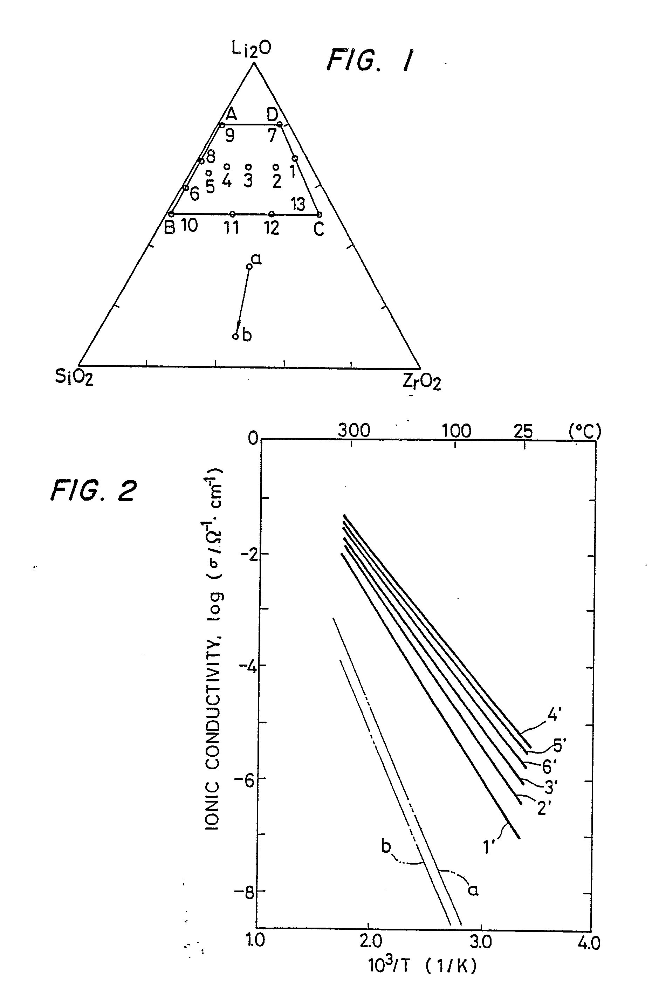

Accordingly, the present invention provides a lithium oxide-based amorphous ionic conductor material comprising a ternary composition of $Li_2O$, $SiO_2$ and $ZrO_2$ capable of forming an ion conductive amorphous thin film, which has a composition in a zone represented by a quadrilateral ABCD on a composition diagram having the three $Li_2O$, $SiO_2$, $ZrO_2$ components as the apexes thereof, as shown in Figure 1, in which sides AD and BC are on the lines which correspond to $Li_2O$ contents of 80% and 50% respectively, and sides AB and CD are on the lines which pass through the $Li_2O$ apex and on which the ratio $SiO_2:ZrO_2$ is 100:0.5 and 1:9 respectively.

The invention will now be explained and Examples given with reference to the accompanying drawings, in which:—

Figure 1 is a $Li_2O/SiO_2/ZrO_2$ ternary system composition diagram showing the composition zone of the material of the present invention; and

Figure 2 is a diagram showing variation in ionic conductivity of examples of the present invention with temperature.

The range of the composition of the present invention has been determined for the following reasons as a result of intensive experiments and trials. First, if $Li_2O$ exceeds 80%, the composition becomes so hygroscopic that it can not be put to practical use. If $Li_2O$ is below 50% and the ratio $SiO_2:ZrO_2$ is out of the range of from 1/9 to 200, the composition has low ionic conductivity.

The composition of the present invention is confirmed to be amorphous by electron diffraction and X-ray diffraction studies of various thin films obtained in the later examples.

As can be confirmed from the later examples, these thin films exhibit high ionic conductivity.

The amorphous solid of the present invention can be produced by the following methods, for example.

i) It can be obtained by means of sputtering using, as a target, a mixture consisting of lithium silicate ($Li_4SiO_4$), and lithium zirconate ($Li_8ZrO_6$) or $ZrO_2$ and a lithium compound that can form $Li_2O$ by sputtering, such as LiOH or $Li_2CO_3$.

ii) It can be obtained by means of sputtering using, as a target, a mixture consisting of $SiO_2$, $ZrO_2$ and a lithium compound that can form $Li_2O$ by sputtering.

The term "mixture" used herein means a mixture of powders of components or a mixture of pellets prepared by pelletizing the powders of the components.

When a thin film is formed by means of sputtering using this mixture target, e.g., a $SiO_2/ZrO_2/Li_2O$ mixture, the composition of the resulting film is one of which the $Li_2O$ content is primarily reduced from that in the target composition. For example, when a thin film is formed using a target having a composition consisting of 0.33 $Li_2O$, 0.33 $SiO_2$ and 0.33 $ZrO_2$ (corresponding to the composition at point *a* in Figure 1), the resulting thin film has a composition consisting of 0.10 $Li_2O$, 0.49 $SiO_2$ and 0.41 $ZrO_2$ which is plotted at point *b* in Figure 1. If a composition obtained by adding additional 4 moles of $Li_2O$ in excess to the composition corresponding to the point *a* is used however, the resulting thin film has a composition which is substantially equal to the one at the point *a*. Furthermore, thin films having closer compositions to the target composition or having a higher $Li_2O$ content than that of the previous target composition can be obtained by increasing quantities of $Li_2O$ and other components to be mixed. In other words, high ionic conductive amorphous thin films having a wide composition range represented by the quadrilateral ABCD shown in Figure 1 can be obtained. $Li_2O$ can be mixed either by uniformly mixing $Li_2O$ powder with a mixture of lithium silicate, zirconia, lithium zirconate and the like, or by disposing $Li_2O$ pellets on said compound target.

2

**0 104 936**

The quantity of $Li_2O$ to be mixed is determined in the following way. If it is mixed in large excess, a composition having a high $Li_2O$ content, that is, a composition above a line connecting A and D (on the $Li_2O$ side) in Figure 1 can be obtained. However, such a composition is not preferable for practical use because its high hygroscopicity. As can be seen from the later Examples and Comparative Examples, the excess quantity of $Li_2O$ to be mixed is preferably at most 8 moles per mol of $(1—x)SiO_2 \cdot xZrO_2$. When $Li_2O$ is used in pellet form, 10 to 30% of the surface area of the target is preferably covered with the $Li_2O$ pellet.

As described already, those lithium compounds which can form $Li_2O$ by sputtering can be used in the same way as $Li_2O$. However, it is not preferred to use lithium compounds including elements other than lithium and oxygen which react with the product, such as halogens. Accordingly, it is preferred to use at least one Li compound selected from the group consisting of $Li_2O$, $Li_2CO_3$ and $LiOH$.

The mixture target of the present invention can be used either in the powder form prepared by merely mixing powders of the components or after the components are molded and sintered.

A 1 to 20 μm-thick thin film can for example be obtained by the method described above. These thin films are suitable for use as a solid electrolyte. They are preferably from 3 to 10 μm thick.

Incidentally, compositions that are stable with molten lithium and provide a high ionic conductive amorphous solid like those of the present invention are $Li_2O/SiO_2/HfO_2$ and $Li_2O/ZrO_2/La_2O_3$ systems.

The present invention will now be described in further detail with reference to Examples thereof.

### Examples 1 to 6

Thin films were formed by a sputter-up process using mixtures prepared by blending $Li_4SiO_4$ and $ZrO_2$ coarse powders as illustrated in Table 1 as the target. Meanwhile, an area corresponding to 20% of the surface of the target was covered with $Li_2O$ pellets to compensate for Li that had been lost during sputtering.

TABLE 1

| Example No. | molar fraction of $Li_4SiO_4$ $(Li_4SiO_4/[Li_4SiO_4+ZrO_2])$ |
|---|---|
| 1 | 0.05 |
| 2 | 0.10 |
| 3 | 0.20 |
| 4 | 0.40 |
| 5 | 0.70 |
| 6 | 0.98 |

An about 2 μm-thick thin film was formed on each silica glass substrate under the sputtering conditions of a vacuum of $2 \times 10^{-2}$ mmHg, a discharge gas of $Ar/O_2$ = 60/40, a plate voltage of 2 kV and a film-forming speed of 0.5 μm/h while cooling the substrate with water in order to prevent rise of the substrate temperature. As a result of chemical analysis, the thin films thus obtained were found to have compositions corresponding to points 1, 2, 3, 4, 5 and 6 in Figure 1, that is, compositions within the range of the present invention.

Changes in ionic conductivity with temperatures measured by an a.c. method using blocking electrodes of these thin films are shown in Figure 2. In the drawing, reference numerals 1', 2', 3', 4', 5' and 6' correspond to the compositions represented by reference numerals 1, 2, 3, 4 5 and 6 in Figure 1, respectively. For reference, changes in ionic conductivity with temperatures of a $Li_8ZrO_6$ sintered body (a) and a $Li_4SiO_4$ sintered body (b) are also shown in Figure 2.

As can be seen from Figure 2, the thin films of the Examples of the present invention are characterized in that they are amorphous, and thin films having arbitrary compositions can be obtained by sputtering. Since they are amorphous, the thin films of the invention exhibit far higher ionic conductivity than sintered bodies prepared by ordinary processes.

### Examples 7 to 13

Coarse powders of $Li_4SiO_4$, $ZrO_2$, $SiO_2$ and $Li_8ZrO_6$ were mixed at the blend ratios shown in Table 2 to prepare mixture targets in the same way as in Examples 1 through 6. Sputtering was effected while covering a certain portion of each target surface with $Li_2O$ pellet and the proportions of the surface area occupied by $Li_2O$ are also shown in Table 2.

3

TABLE 2

| Example No. | target composition mole (%) | | | | percentage surface area occupied by $Li_2O$ on target surface (%) |
|---|---|---|---|---|---|
| | $Li_4SiO_4$ | $Li_8ZrO_6$ | $SiO_2$ | $ZrO_2$ | |
| 7 | 10 | 90 | 0 | 0 | 20 |
| 8 | 90 | 10 | 0 | 0 | 20 |
| 9 | 90 | 10 | 0 | 0 | 30 |
| 10 | 0 | 0 | 85 | 15 | 15 |
| 11 | 0 | 0 | 50 | 50 | 15 |
| 12 | 0 | 0 | 30 | 70 | 13 |
| 13 | 0 | 0 | 5 | 95 | 10 |

The compositions of the resulting thin films and the lithium ion conductivity at room temperature are shown in Table 3.

TABLE 3

| Example No. | thin film composition (mole %) | | | ionic conductivity (room temp.) $(\Omega \cdot cm)^{-1}$ |
|---|---|---|---|---|
| | $Li_2O$ | $SiO_2$ | $ZrO_2$ | |
| 7 | 80 | 2 | 18 | $3.5 \times 10^{-7}$ |
| 8 | 70 | 29.5 | 0.5 | $2 \times 10^{-6}$ |
| 9 | 78 | 21 | 1 | $4 \times 10^{-7}$ |
| 10 | 50 | 48 | 2 | $2 \times 10^{-7}$ |
| 11 | 51 | 30 | 19 | $1.8 \times 10^{-7}$ |
| 12 | 50.5 | 19 | 30.5 | $1.0 \times 10^{-7}$ |
| 13 | 50 | 5 | 45 | $1.5 \times 10^{-7}$ |

The thin films obtained in these Examples 7 through 13 exhibited high lithium ion conductivity substantially equal to that of the thin films obtained in Examples 1 through 6. They had also low hygroscopicity. It was found that they did not react at all with molten lithium and were extremely stable solid electrolyte thin films.

The intensity of reaction between the Li metal and the solid electrolyte is determined by the magnitude of changes in the free energy of the $Li_2O$ formation reaction. $Li_4SiO_4$ and $Li_8ZrO_6$ as the basic components in the present invention have small changes in the free energy of the reaction and are highly stable. On the other hand, heretofore known solid electrolytes such as $Li_4SiO_4/Li_3PO_4$ or $Li_4GeO_4/Li_3VO_4$ have large changes in the free energy of the reaction and lack stability. Especially, for application as the solid electrolyte for a secondary battery, thermodynamic stability with Li becomes an extremely important factor for battery stability.

As described above, the present invention can provide a thin film having extremely high ionic conductivity. Since the thickness of the thin film is incomparably smaller than that of normal bulk materials that are chemically stable, the resistance of a device due to the ionic conductivity can also be reduced extremely greatly. This provides a remarkable effect when the solid electrolyte is applied to a variety of devices. Though the thin film of the present invention is amorphous, it has an ionic conductivity

4

substantially equal to that of a high ionic conductive crystal and is believed to be very promising as a material for various electronic devices because crystallization by heat-treatment is not necessary after sputtering.

**Claims**

1. A lithium oxide-based amorphous ionic conductor material characterized by a ternary composition of $Li_2O$, $SiO_2$ and $ZrO_2$ and capable of forming an ion conductive amorphous thin film, wherein said compositions falls within the quadrilateral ABCD on a composition diagram having $Li_2O$, $SiO_2$ and $ZrO_2$ as the respective apexes thereof, the side AD being on a line corresponding to a $Li_2O$ content of 80%, side AB being on a line which passes through the $Li_2O$ apex and on which the ratio $SiO_2$:$ZrO_2$ is 100:0.5, the side BC being on a line corresponding to a $Li_2O$ content of 50%, and the side DC being on a line which passes the $Li_2O$ apex and on which the radio $SiO_2$:$ZrO_2$ is 1:9.

2. A lithium oxide-based amorphous ionic conductor material according to claim 1 wherein said amorphous thin film is formed by sputtering.

3. A lithium oxide-based amorphous ionic conductor material according to claim 2 in which the starting material include at least one of $Li_2O$, $Li_2CO_3$ and $LiOH$.

4. A lithium oxide-based amorphous ionic conductor material according to claim 2 or claim 3 in which 10% to 30% of the area of the tangent in the sputtering is covered by pellets of $Li_2O$ or a $Li_2O$ forming compound.

5. A thin film amorphous ionic conductor composed of a material according to any one of the preceding claims.

6. A thin film amorphous ionic conductor according to claim 5 wherein said amorphous thin film is from 1 to 20 μm thick.

**Patentansprüche**

1. Amorphes Ionenleitermaterial auf Lithiumoxid-Basis, gekennzeichnet durch eine ternäre Zusammensetzung aus $Li_2O$, $SiO_2$ und $ZrO_2$, die in der Lage ist, einen dünnen Ionen-leitenden amorphen Film zu bilden, wobei die Zusammensetzung in das Viereck ABCD in dem Zusammensetzungsdiagramm fällt, welches $Li_2O$, $SiO_2$ und $ZrO_2$ als die jeweiligen Scheitelpunkte hat, wobei die Seite AD auf einer einem $Li_2O$-Gehalt von 80% entsprechenden Linie liegt, die Seite AB auf einer Linie liegt, die durch den $Li_2O$-Scheitelpunkt verläuft und auf der das Verhältnis $SiO_2$ : $ZrO_2$ = 100:0,5 ist, die Seite BC auf einer Linie liegt, die einem $Li_2O$-Gehalt von 50% entspricht, und die Seite DC auf einer Linie liegt, die durch den $Li_2O$-Scheitelpunkt verläuft und auf der das Verhältnis $SiO_2$ : $ZrO_2$ gleich 1:9 ist.

2. Amorphes Ionenleitermaterial auf Lithiumoxid-Basis nach Anspruch 1, wobei der amorphe dünne Film durch Sputtern gebildet ist.

3. Amorphes Ionenleitermaterial auf Lithiumoxid-Basis nach Anspruch 2, bei dem das Ausgangsmaterial wenigstens eines der Materialien $Li_2O$, $Li_2CO_3$ und $LiOH$ umfaßt.

4. Amorphes Ionenleitermaterial auf Lithiumoxid-Basis nach Anspruch 2 oder Anspruch 3, bei dem 10% bis 30% der Fläche des Target beim Sputtern mit Plättchen aus $Li_2O$ oder einer $Li_2O$ bildenden Verbindung bedeckt sind.

5. Amorpher Dünnfilm-Ionenleiter, zusammengesetzt aus einem Material nach · einem der vorangehenden Ansprüche.

6. Amorpher Dünnfilm-Ionenleiter nach Anspruch 5, wobei der amorphe dünne Film zwischen 1 und 20 μm dick ist.

**Revendications**

1. Matériau conducteur d'ions amorphe à base d'oxyde de lithium, caractérisé par une composition ternaire de $Li_2O$, de $SiO_2$ et de $ZrO_2$ et apte à former une pellicule mince amorphe conductrice d'ions, ladite composition se situant à l'intérieur du quadrilataire ABCD dans un diagramme de composition ayant pour sommets respectifs $Li_2O$, $SiO_2$ et $ZrO_2$, le côté AD étant une droite correspondant à une teneur de 80% en $Li_2O$, le côté AB étant une droite passant par le sommet $Li_2O$ et sur laquelle le rapport $SiO_2$:$ZrO_2$ est égal à 100:0,5 le côté BC étant situé sur une droite correspondant à une teneur de 50% en $Li_2O$, et le côté DC étant situé sur une droite qui passe par le sommet de $Li_2O$ et sur laquelle le rapport $SiO_2$ : $ZrO_2$ : est égal à 1 : 9.

2. Matériau conducteur d'ions amorphe à base d'oxyde de lithium selon la revendication 1, dans lequel ladite pellicule mince amorphe est formée par pulvérisation.

3. Matériau conducteur d'ions amorphe à base d'oxyde lithium selon la revendication 2, dans lequel le matériau de départ comporte au moins l'un ders éléments $Li_2O$, $Li_2CO_3$ et $LiOH$.

4. Matériau conducteur d'ions amorphe à base de lithium selon la revendication 2 ou 3, dans lequel 10 à 30% de la surface de la cible lors de la pulvérisation est recouverte par des pastilles de $Li_2O$ ou d'un composé formant du $Li_2O$.

5. Conducteur d'ions amorphe en forme de pellicule mince, constitué en un matériau selon l'une quelconque des revendications précédentes.

6. Conducteur d'ions amorphe en forme de pellicule mince selon la revendication 5, dans lequel ladite pellicule mince amorphe possède une épaisseur comprise entre 1 et 20 μm.

FIG. 1

FIG. 2